Europäisches Patentamt

(19) European Patent Office

Office européen des brevets

(11) Publication number: **0 082 571**
**B1**

(12) **EUROPEAN PATENT SPECIFICATION**

(45) Date of publication of patent specification: **29.10.86**

(51) Int. Cl.⁴: **C 02 F 1/56, B 03 B 1/04, C 08 F 220/56**

(21) Application number: **82201619.2**

(22) Date of filing: **16.12.82**

(54) **A method for clarifying coal liquors with water-soluble, high molecular weight polymers having low concentration of cationic moieties.**

(30) Priority: **18.12.81 US 332078**

(43) Date of publication of application:
**29.06.83 Bulletin 83/26**

(45) Publication of the grant of the patent:
**29.10.86 Bulletin 86/44**

(84) Designated Contracting States:
**DE GB SE**

(56) References cited:
**EP-A-0 007 259**
**US-A-3 488 720**
**US-A-4 022 731**
**US-A-4 147 681**
**US-A-4 160 731**

(73) Proprietor: **THE DOW CHEMICAL COMPANY**
**2030 Dow Center Abbott Road P.O. Box 1967**
**Midland, MI 48640 (US)**

(72) Inventor: **Easterly, James Pearn, Jr.**
**5038 Reinhardt**
**Bay City, MI 48706 (US)**
Inventor: **Foshee, William Charles**
**4306 E. 107th St.**
**S., Tulsa, OK 74136 (US)**
Inventor: **Lamphere, Jack Calvin**
**1916 E. Wheeler**
**Midland, MI 48640 (US)**

(74) Representative: **Urbanus, Henricus Maria, Ir. et al**
**c/o Vereenigde Octrooibureaux Nieuwe Parklaan 107**
**NL-2587 BP 's-Gravenhage (NL)**

Courier Press, Leamington Spa, England.

# 0 082 571

**Description**

This invention relates to a method for clarifying coal liquors or slurries by employing water-soluble polymers, which comprises contacting an aqueous suspension of coal particles with a water-soluble high molecular weight polymer.

Clarification of coal liquors or slurries is an important aspect in the economy of operating a coal production plant. Generally, such plants are operated on a closed system basis in that the water used to wash the raw coal is recycled for reuse. Since such water serves primarily to remove coal fines and clays mixed with the raw coal thereby forming coal liquors, it is critical that the water be relatively clear and contain only minor amounts of suspended solids when it is reused in the washing procedure. Otherwise, undesirable large volumes of water would be necessary to process the coal. Since the coal fines and clay which are removed from these coal liquors are often used as filler materials and in other applications which require inexpensive inert materials, it is essential that such coal liquor clarification be very inexpensive.

Previously, the coal industry has employed various anionic and cationic, water-soluble polymers to remove both coal particles and colloidal clay particles. For example, as taught in U.S. Patent No. 3,408,293, it is a common practice to prefloc the coal liquor or coal slurry with anionic polymers in order to coagulate the coal particles and subsequently treat the prefloc slurry with cationic polymer in order to flocculate the coal particles. Unfortunately, as indicated in this patent, very careful control over the quantities of anionic and cationic polymers employed must be exercised in order to obtain efficient clarification of the coal liquor. Also, significant quantities of the various polymers need to be employed in order to achieve such desirable coal liquor clarification.

In US—A 4,160,731 a process for recovering disinfected solids suitable for use as landfill from sewage sludge is described. A copolymer of acrylamide and 3 - (methacrylamide) - propyl - trimethyl ammonium chloride is shown to be effective in the dewatering of sewage sludges that have been disinfected with lime. This reference points out that dewatering of sewage sludges is a particularly difficult operation to carry out and only a limited number of cationic flocculants have been found efficient in this operation. There is no suggestion to use any of these cationic flocculants to clarify coal liquors.

EP—A 7,259 is concerned with a method of breaking oil-in-water emulsions by treating the emulsion with a demulsifying amount of a copolymer of acrylamide and methacrylamidopropyl trimethylammonium chloride where said copolymer is at least 50% by weight acrylamide. Normally, at least 10 ppm of copolymer, preferably 20—40 ppm of copolymer, based on the weight of the emulsion, is employed.

US— 4,022,731 claims a freeze-thaw stable, self-inverting, non-creaming water-in-oil emulsion containing a dispersion therein of finely-divided polymer particles and a method of preparing the freeze-thaw stable emulsion. This patent does not contain any examples directed to the use of these emulsions nor any suggestions as to the amount of the emulsions to use for any application.

In view of the foregoing deficiencies of the prior art procedures for coal liquor clarification, it is highly desirable to provide a method which does not require careful control over the quantities of polymers to be employed and which does not require the use of such substantial quantities of materials in order to achieve the desired clarification.

The present invention is directed to a method for clarifying coal liquors which comprises contacting an aqueous suspension of coal particles with a clarifying amount of a water-soluble, high molecular weight copolymer of a nonionic water-soluble monomer and a water-soluble cationic comonomer wherein the copolymer contains an amount of cationic moiety of 1 to less than 40 mole percent of the copolymer. The method is characterised in that the copolymer is added in amounts of from 1 to 10 weight parts of copolymer per million weight parts of coal liquor.

Surprisingly, it is found that the practice of the present invention utilizing the copolymers having relatively low cationic content provides coal liquor clarification more efficiently than prior art techniques employing high molecular weight nonionic polymers or low molecular weight polymers having relatively high cationic content. In addition, it is found that the present invention can be practiced successfully without any prior treatment of the coal liquor with an anionic polymer.

The practice of the present invention is found to successfully clarify any of a wide variety of coal liquors containing coal particles and colloidal-size clay particles and other suspended particles common to coal liquors.

For the purposes of this invention, the term "coal liquor" is meant to include any aqueous suspension of coal particles including particles of hard coal such as anthracite as well as soft coal such as lignite. Such suspensions advantageously contain from 0.25 to 50, preferably from 2 to 30, most preferably from 2 to 10, weight percent of total solids. Such liquors contain coal particles and may contain colloidal-size clay particles wherein the proportion of clay to coal may vary from 95:5 to 5:95, usually from 80:20 to 20:80 on a weight basis.

Cationic copolymers suitably employed in the practice of this invention are copolymers of nonionic, water-soluble monomers such as acrylamide and methacrylamide with a quaternized ethylenically unsaturated monomer such as acryloylalkyl trialkyl ammonium salts, e.g., acryloylethyl trimethyl ammonium chloride; methacryloylalkyl trialkyl ammonium salts, e.g., methacryloylethyl trimethyl ammonium chloride; acrylamido- and methacrylamidoalkyl trialkyl ammonium salts, e.g., acrylamidopropyl trimethyl ammonium chloride and methacrylamidopropyl trimethyl ammonium

2

chloride. Such copolymers have generally high molecular weight with preferred copolymers having weight average molecular weights (Mw) in excess of 100,000, more preferably in excess of 500,000, most preferred copolymers have molecular weights (Mw) in the range of from 1 million to 25 million. These cationic copolymers have sufficient cationic moiety to increase the capability of the copolymer to flocculate coal liquors over that of a polyacrylamide having the same molecular weight. However, such cationic copolymers contain less than 40 mole percent of cationic monomers. Preferred cationic copolymers have from 1 to 30 mole percent of cationic moiety, more preferably from 2 to 20, most preferably from 5 to 15, and especially from 5 to 12, mole percent. In addition to the aforementioned nonionic comonomer and cationic copolymer, the cationic copolymers of this inveniton may also contain up to 1.5 mole percent, preferably less than 5 mole percent, of anionic comonomers such as acrylic acid, methacrylic acid, as well as acrylamidoalkyl sulfonic acids and methacrylamido sulfonic acids, e.g., acrylämidomethylpropyl sulfonic acid.

In practice, the coal liquor is contacted with an amount of the aforementioned cationic copolymer which is sufficient to remove the suspended coal particles from the aqueous phase. In preferred embodiments wherein the coal liquor also contains suspended clay particles, the copolymer is added in amounts sufficient to remove both suspended coal particles and clay particles from the aqueous phase. Such amounts are in the range from 1 to 10 ppm. The mode of adding the cationic copolymer to the coal slurry is not particularly critical as long as a uniform dispersion of the copolymer in the coal slurry is achieved. Advantageously, however, the cationic copolymer is dissolved in an aqueous solution in concentrations from 0.2 to 1.5 weight percent, most preferably from 0.3 to 0.6 weight percent prior to addition to the coal liquor. It is understood that the cationic copolymer may be added to the coal liquor as a water-in-oil emulsion, e.g., as described in U.S. Reissue Patent US—E—28,474, which contains sufficient water-soluble surfactant to cause inversion when combined with the coal slurry. Alternatively, the emulsion may be inverted to form an aqueous solution and then added to the coal liquor.

Although not required, it is sometimes advantageous to pretreat the coal liquor with an anionic, water-soluble copolymer prior to contacting the liquor with the cationic copolymer. Alternatively, the anionic copolymer can be added to the coal liquor after the cationic copolymer is added. In either instance, the anionic copolymer is usually dissolved in an aqueous medium to form an aqueous solution of the copolymer having from 0.25 to 0.5 weight percent of the anionic copolymer and then added to the coal liquor. Typically, the anionic copolymer is added in an amount sufficient to cause preliminary flocculation of the coal particles. Such quantities are preferably in the range from 0.3 to 10 weight parts of the anionic copolymer per million weight parts of the coal liquor, most preferably from 0.5 to 2 ppm. As an additional advantage of the practice of this invention, it is found that significantly less of the anionic polymer is used in the pretreatment than is if some other cationic polymer is employed. In fact, in many instances, the treatment with anionic copolymer is not required.

In the practice of this invention, it is found that the coal liquors can be clarified to a level such that the transmittance of light through the liquor is often in excess of 75 percent and under preferred conditions is in excess of 85 percent. In addition, it is also found that settling rates and the degree of compaction are significantly improved by practicing the present invention as compared to prior art procedures utilizing conventional cationic polymers having low molecular weight, e.g., Mw<50,000 and relatively high concentration of cationic monomer, e.g., >60 mole percent.

The following examples are given for the purposes of illustrating the present invention and should not be construed as limiting its scope. Unless otherwise indicated, all parts and percentages are by weight.

General procedure for clarification of coal liquor

Coal-clay suspensions obtained from various coal preparation plants were dewatered and dried in an oven operated at 150°F (66°C). The dried tailings were dispersed in tap water to 5 percent solids by mixing 3 liters of water with the desired amount of coal tailings for 3 minutes at high speed on a commercial Waring Blendor to form a coal liquor.

Each of the polymer flocculants tested was diluted to a concentration of 0.25 percent (active polymer weight) and allowed to equilibrate. The resulting solutions were then diluted to a concentration of 0.025 percent immediately before use.

A 250-ml portion of the mixed coal liquor was poured into a 250 ml volumetric cylinder. An amount of the 0.025 percent flocculant solution as indicated in Table I was added to the liquor and then the cylinder was stoppered. The cylinder was rotated end-over-end 4 consecutive times, set in front of a light source and unstoppered.

The height of the compacted column, the settling rate for the solid liquid interface to settle to various levels and clarity of the supernatant liquid at the end of 3 minutes were determined and recorded in Table I. Clarity of the supernatant liquid was determined using a Hach Chemical Company Spectrophotometer. Clarity is defined in terms of percent of light transmittance using light having a wave length of 450 nanometers.

Relative performance of the various polymer flocculants was calculated according to the following equation: relative performance equals the performance of the test polymer divided by the performance of a standard polymer wherein polymer performance is equal to (7.8 times clarity of the supernatant in percent transmittance at 3 minutes times the square root of the sum of 1 plus the settling rate of the solids in inches

3

per minutes) divided by (the concentration of the active polymer flocculant in parts per million based on the weight of the coal liquor times the fourth root of the height in inches of the compacted column after 3 minutes).

Example 1

Following the foregoing procedure, a copolymer of 92.5 mole percent of acrylamide and 7.5 mole percent of methacryloylethyl trimethyl ammonium chloride having a weight average molecular weight of ∿5 million and prepared in the form of a water-in-oil emulsion in accordance with the teachings of U.S. Reissue Patent US—E—28,474 was tested for flocculating capability for coal liquors. An aqueous solution of 0.3 weight percent of the copolymer in 4 percent NaCl exhibited a viscosity at 25°C of 15 cps (0.015 Pa · s). The results of these tests are recorded in Table I.

Following the same procedure, several cationic polymers of the prior art were similarly tested for flocculating capability and the results of these tests are also recorded in Table I.

## 0 082 571

### TABLE I

| Sample No. | Coal liquor[1] | | Cationic flocculant[2] | | % Light transmittance[3] |
|---|---|---|---|---|---|
| | Type | pH | Type | Dosage, ppm | |
| 1 | BEH | 6.9 | AAM/METAC | 2.5 | 95 |
| C$_1$* | BEH | 6.9 | PAPA | 2.5 | 46 |
| C$_2$* | BEH | 6.9 | PVBTMAC | 2.5 | 56 |
| 2 | PAT | 7.5 | AAM/METAC | 1.5 | 75 |
| 3 | PAT | 7.5 | AAM/METAC | 2.0 | 86 |
| C$_3$* | PAT | 7.5 | PAPA | 2.0 | 26 |
| C$_4$* | PAT | 7.5 | PVBTMAC | 2.0 | 24 |
| 4 | ALB | 8 | AAM/METAC | 5.5 | 81 |
| C$_5$* | ALB | 8 | PVBTMAC | 6.0 | 10 |

### TABLE I (cont'd.)

| Sample No. | Settling rate[4] cm/min (in/min) | Compaction[5] cm (in) | Relative performance[6] |
|---|---|---|---|
| 1 | 40.64 (16) | 4.572 (1.8) | 1.00 |
| C$_1$* | 5.08 (2) | 19.05 (7.5) | 0.14 |
| C$_2$* | 5.08 (2) | 9.652 (3.8) | 0.20 |
| 2 | 101.6 (40) | 1.524 (0.6) | 1.16 |
| 3 | 101.6 (40) | 1.524 (0.6) | 1.00 |
| C$_3$* | 10.16 (4) | 2.794 (1.1) | 0.09 |
| C$_4$* | 10.16 (4) | 2.794 (1.1) | 0.08 |
| 4 | 27.94 (11) | 7.62 (3.0) | 1.00 |
| C$_5$* | 1.27 (0.5) | 28.70 (11.3) | 0.03 |

\* Not an example of the invention
[1] Coal liquor having pH as indicated. The letter symbols indicate the type of coal liquor wherein:

BEH—coal liquor containing 21 percent coal and 79 percent ash wherein the ash is 78 percent silica/22 percent clay wherein the clay is 64 percent illite/36 percent mixture of kaolinite and chlorite
PAT—coal liquor containing 39 percent coal and 61 percent ash wherein the ash is 60 percent silica/40 percent clay wherein the clay is 32 percent illite/68 percent kaolinite
ALB—coal liquor containing 15 percent coal and 85 percent ash wherein the ash is 64 percent silica/36 percent clay wherein the clay is 50 percent illite/19 percent mixture of kaolinite and chlorite/31 percent montmorillonite.

[2] Cationic polymer flocculant used in parts per million parts of coal liquor wherein
AAM/METAC is the acrylamide/methacryloylethyl trimethyl ammonium chloride (92.5/7.5) having a Mw of ∿5 million.
PAPA is a polyethylene polyamine having a Mw of ∿80,000.
PVBTMAC is polyvinylbenzyl trimethyl ammonium chloride having a Mw of ∿80,000.
[3]-[6] are as defined in the aforementioned General Procedure.

As evidenced by the data shown in Table I, the cationic acrylamide copolymer of Sample Nos. 1—4 is a superior flocculant to commercial cationic coal liquor flocculants such as polyalkylene polyamines and polyvinylbenzyl trimethyl ammonium chloride polymers.

Example 2

Following the general procedure mentioned hereinbefore, the cationic acrylamide copolymer of Example 1 was tested for flocculant activity when combined with an anionic acrylamide preflocculant copolymer or an anionic acrylamide postflocculant copolymer as indicated in Table II. The results of these tests are recorded in Table II.

For purposes of comparison, the conventional cationic polymers employed in Example 1 were also used in combination with anionic preflocculants and anionic postflocculants. The results of these tests are also reported in Table II.

TABLE II

| Sample No. | Coal liquor[1] | | Prefloc[7] | | Cationic flocculant[2] | | Postfloc[8] | |
|---|---|---|---|---|---|---|---|---|
| | Type | pH | Type | Dosage ppm | Type | Dosage ppm | Type | Dosage ppm |
| 5 | BEH | 7 | — | — | AAM/METAC | 2 | — | — |
| 6 | BEH | 7 | AAM/AA(a) | 0.5 | AAM/METAC | 1.5 | — | — |
| $C_6$* | BEH | 7 | AAM/AA(a) | 0.5 | PVBTMAC | 1.5 | — | — |
| 7 | PEV | 7.2 | — | — | AAM/METAC | 2.5 | — | — |
| 8 | PEV | 7.2 | AAM/AA(a) | 1 | AAM/METAC | 1.5 | — | — |
| $C_7$* | PEV | 7.2 | AAM/AA(a) | 1 | PVBTMAC | 1.5 | — | — |
| 9 | PAT | 7.5 | — | — | AAM/METAC | 1.5 | — | — |
| 10 | PAT | 7.5 | — | — | AAM/METAC | 1.5 | AAM/AA(b) | 0.5 |
| $C_8$* | PAT | 7.5 | — | — | PVBTMAC | 2.0 | — | — |
| $C_9$* | PAT | 7.5 | — | — | PVBTMAC | 2.0 | AAM/AA(b) | 0.5 |
| $C_{10}$* | PAT | 7.5 | — | — | PAPA | 2.0 | — | — |
| $C_{11}$* | PAT | 7.5 | — | — | PAPA | 2.5 | AAM/AA(b) | 0.5 |

# 0 082 571

TABLE II (cont'd.)

| Sample No. | % Light transmittance[3] | Settling rate[4] cm/min (in/min) | Compaction[5] cm (in) | Relative performance[6] |
|---|---|---|---|---|
| 5 | 62 | 23.88 (9.4) | 6.35 (2.5) | 1.00 |
| 6 | 71 | 22.86 (9.0) | 6.60 (2.6) | 1.11 |
| $C_6$* | 47 | 7.11 (2.8) | 13.46 (5.3) | 0.38 |
| 7 | 83 | 32.00 (12.6) | 5.33 (2.1) | 1.00 |
| 8 | 87 | 33.53 (13.2) | 5.33 (2.1) | 1.07 |
| $C_7$* | 70 | 16.00 (6.3) | 5.33 (2.1) | 0.62 |
| 9 | 75 | 101.6 (40) | 1.52 (0.6) | 1.16 |
| 10 | 89 | 88.9 (35) | 1.27 (0.5) | 1.00 |
| $C_8$* | 24 | 10.16 (4) | 2.79 (1.1) | 0.08 |
| $C_9$* | 58 | 43.18 (17) | 1.52 (0.6) | 0.35 |
| $C_{10}$* | 26 | 10.16 (4) | 2.79 (1.1) | 0.09 |
| $C_{11}$* | 61 | 43.18 (17) | 1.52 (0.6) | 0.37 |

* Not an example of the invention.

(1) Same as (1) in Table I except that

PEV—coal liquor containing 82 percent coal and 18 percent ash wherein the ash is 57 percent silica/43 percent clay wherein the clay is 37 percent illite/63 percent kaolinite and chlorite.

(2)–(6) Same as (2)–(6) in Table I.

(7) Preflocculant in parts per million parts of coal liquor is added to the liquor prior to addition of the cationic flocculant. AAM/AA(a) is a copolymer of 75 weight percent acrylamide and 25 weight percent acrylic acid having a Mw of ∞10 million.

(8) Postflocculant in parts per million parts of coal liquor is added to the liquor subsequent to addition of the cationic flocculant. AAM/AA(b) is a copolymer of ≧96 weight percent acrylamide and ≦4 weight percent acrylic acid having a Mw of ∞9 million.

As evidenced by the data shown in Table II, the cationic copolymer of the present invention is a superior flocculant to conventional anionic copolymers whether employed alone or in combination with an anionic preflocculant or postflocculant. In fact, as shown by Table II, the cationic copolymer of the present invention performs almost as well in the absence of an anionic copolymer as in its presence.

## Claims

1. A method for clarifying coal liquors which comprises contacting an aqueous suspension of coal particles with a water-soluble, high molecular weight copolymer of a nonionic water-soluble monomer and a water-soluble cationic comonomer, wherein the copolymer contains an amount of cationic moiety of 1 to less than 40 mole percent of the copolymer, characterized in that the copolymer is added in amounts of from 1 to 10 weight parts of copolymer per million weight parts of coal liquor.

2. The method of Claim 1 wherein the aqueous suspension contains from 0.25 to 50 weight percent of total solids.

3. The method of Claim 2 wherein said total solids comprise coal particles and colloidal-size clay particles.

4. The method of Claim 3 wherein the copolymer has a weight average molecular weight of at least 1 million and contains from 5 to 12 mole percent of the cationic comonomer.

5. The method of Claim 4 wherein the nonionic monomer is acrylamide.

6. The method of Claim 5 wherein the cationic comonomer is an acryloylalkyl trialkyl ammonium halide or a methacryloylalkyl trialkyl ammonium halide.

7. The method of Claim 6 wherein the cationic comonomer is methacryloylethyl trimethyl ammonium chloride.

8. The method of Claim 5 wherein the cationic comonomer is methacrylamidopropyl trimethyl ammonium chloride.

8

9. The method of Claim 1 wherein the copolymer has a weight average molecular weight greater than 100,000.

**Patentansprüche**

1. Verfahren zur Klärung von Kohlenwaschwasser, umfassend das Behandeln einer wäßrigen Suspension von Kohlepartikeln mit einem wasserlöslichen, hochmolekularen Copolymer eines nichtionischen, wasserlöslichen Monomers und eines wasserlöslichen kationischen Comonomers, wobei der Anteil an kationischen Gruppen im Copolymer von 1 bis weniger als 40 mol% beträgt, dadurch gekennzeichnet, daß das Copolymer in Mengen von 1 bis 10 Gewichtsteilen Copolymer pro Million Gewichtsteilen Kohlenwaschwasser zugesetzt wird.

2. Verfahren nach Anspruch 1, in dem die wäßrige Suspension 0,25 bis 50 Gew.% der gesamten Feststoffe enthält.

3. Verfahren nach Anspruch 2, in dem die gesamten Feststoffe Kohlepartikel und kolloidale Tonpartikel umfassen.

4. Verfahren nach Anspruch 3, in dem das Copolymer ein durchschnittliches Molekulargewicht von wenigstens einer Million aufweist und zwischen 5 und 12 mol% des kationischen Comonomers enthält.

5. Verfahren nach Anspruch 4, in dem das nichtionische Monomer Acrylamid ist.

6. Verfahren nach Anspruch 5, in dem das kationische Comonomer ein Acryloylalkyltrialkylammoniumhalogenid oder ein Methacryloylalkyltrialkylammoniumhalogenid ist.

7. Verfahren nach Anspruch 6, in dem das kationische Comonomer Methacryloylethyltrimethylammoniumchlorid ist.

8. Verfahren nach Anspruch 5, in dem das kationische Comonomer Methacrylamidopropyltrimethylammoniumchlorid ist.

9. Verfahren nach Anspruch 1, in dem das Copolymer ein durchschnittliches Molekulargewicht aufweist, das größer als 100.000 ist.

**Revendications**

1. Une méthode pour clarifier des solutions de charbon, qui comprend contacter une suspension aqueuse de particules de charbon avec un copolymère soluble dans l'eau, de poids moléculaire élevé d'un monomère soluble dans l'eau non ionique et un comonomère cationique soluble dans l'eau, le copolymère contenant une quantité de fraction cationique de 1 jusque moins de 40% moléculaire du copolymère, caractérisée en ce que le copolymère est ajouté en quantités de 1—10 parties en poids de copolymère par million de parties en poids de la solution de charbon.

2. La méthode selon la revendication 1, dans laquelle la suspension aqueuse contient de 0,25—50% en poids de solides totaux.

3. La méthode selon la revendication 2, dans laquelle ces solides totaux comprennent des particules de charbon et des particules d'argile de dimension colloïdale.

4. La méthode selon la revendication 3, dans laquelle le copolymère a un poids moléculaire moyen pondéral d'au moins 1 million et contient de 5 à 12% moléculaire du comonomère cationique.

5. La méthode selon la revendication 4, dans laquelle le monomère non ionique est amide acrylique.

6. La méthode selon la revendication 5, dans laquelle le comonomère cationique est un halogénure d'ammonium acryloylalcoyle trialcoyle ou un halogénure d'ammonium méthacryloylalcoyle trialcoyle.

7. La méthode selon la revendication 6, dans laquelle le comonomère cationique est le chlorure d'ammonium méthacryloyléthyle triméthyle.

8. La méthode selon la revendication 5, dans laquelle le comonomère cationique est le chlorure d'ammonium méthacrylamidopropyle triméthyle.

9. La méthode selon la revendication 1, dans laquelle le copolymère a un poids moléculaire moyen pondéral en excès de 100,000.